# EUROPEAN PATENT SPECIFICATION

(11) **EP 1 428 695 B1**
(45) Date of publication and mention of the grant of the patent: **05.12.2007**
(21) Application number: 03016014.7
(22) Date of filing: 15.07.2003
(51) Int. Cl.: B60C 29/06

(54) **Anti-sabotage and anti-theft device for tire inflating valves**
Diebstahlsicherung und Sabotageschutzvorrichtung für Reifenventile
Dispositif anti-sabotage et anti-vol pour soupapes de pneumatiques

(30) Priority: 12.12.2002 IT BO20020780
(43) Date of publication of application: 16.06.2004
(73) Proprietor: Barbanti, Giovanni, 40033 Casalecchio di Reno (Bologna) (IT)
(72) Inventor: Barbanti, Giovanni, 40033 Casalecchio di Reno (Bologna) (IT)
(74) Representative: Rinaldi, Carlo

(56) References cited:
- DE-A- 4 104 378
- US-A- 6 102 064

## Description

### BACKGROUND OF THE INVENTION

Most of the terrain and aircraft vehicles moving today use gas-inflated tires with or without tubes. For a proper functioning, a tire has to contain a pre-established gas quantity (usually air, but also different kind of gases), that means that the gas in the tire must reach and maintain a prefixed pressure value in function of a determined reference temperature. When the tire is inflated by introducing a proper gas quantity, said quantity decreases because of natural gas leaks from the tire and, eventually, from other components of the wheel group; this occurs also because of accidental leaks, of more or less high intensity, due to damages and/or punctures. Moreover, the right quantity of gas to be introduced into the tire depends, according to the instructions of the manufacturers of the tires and the vehicles on which said tires are mounted, on the expected using conditions, and in particular on the load and speed. Therefore, more or less frequent interventions are necessary in order to modify or to reset the right quantity of gas inside the tires.

### MAIN FEATURES OF THE INVENTION

The anti-sabotage and anti-theft device for inflating valves of the tires comprises:
a cap with an internally threaded body screwing on an inflating valve of tire;
an envelope connected to the internally threaded body through a free wheel allowing the screwing only and not the unscrewing of the cap, the envelope preventing to directly access to the threaded body,
the access occurring only in a pre-established zone of the threaded body, while the unscrewing of the threading body occurring through a tool acting on said zone.

In a first embodiment the free wheel presents a radial development.

In a second embodiment the free wheel presents an axial development.

An element is provided between the threaded body and the threaded end of the tube of the valve; the element generates an unscrewing couple, which is higher than the one due to the clamping of the threaded body on the tube only.

US-A- 6 102 064, corresponding with the preamble of claim 1, relates to a theft resistant valve cap. The valve comprises a liner adapted for threaded engagement with a standard pneumatic tire stem valve, a sleeve rotatably mounted with the liner to shroud it and an interlocking feature to selectively prevent axial displacement between the liner and the sleeve. The interlocking feature includes a screw threaded into an aperture in the sleeve, or other coupling device, and an annular channel on the liner, positioned to receive the screw. The annular channel has an upper surface, a lower surface and an inner surface disposed between the upper and lower surfaces. The screw is moved so that it extends into the channel resting proximate to the upper surface, but clear of both said lower and inner surfaces. The screw can be removed after the valve cap has been installed. In this fashion, the liner and the sleeve are in a fixed axial position with respect to each other; however, the rotatability of the sleeve with respect to the liner is maintained, preventing removal of the liner from the stem. The rotational movement of the sleeve prevents removing the liner and/or the sleeve from the valve stem.

DE-A-41 04 378 discloses a bicycle wheel valve lock consists of three parts and a key. An inner cylinder is screwed into an outer cylindrical cover by means of threads of standard valve dimensions and a spring ring is inserted into the inner indentation of the outer cover, so protecting the inner cylinder from removal, whilst the ring itself is releasable by the use of an appropriately pronged key. ADVANTAGE - Lock for a bicycle wheel valve designed to prevent the theft of the valve or the deflation of the tyre by vandals.

These and other prior art documents disclose devices capable of preventing the illicit screwing of the valve cap from the inflating valve.

However, no prior art document presents an envelope and an internally threaded body connected trough a free-wheel. This coupling allowing the valve cap to be screwed onto the tire valve, but disables the unscrewing of the cap.

In order to obtain the unscrewing of the cap, an undercut tool is used to reach the pre-established zone of the threaded body; the tool engaging teeth found on a lower appendix of the threaded body.

The undercut tool is fitted with own teeth shaped to apply an unscrewing couple only and not a screwing one.

The pre-established accessing zone to the threaded body for the unscrewing, engaged by a tool, is located on the upper part of the threaded body and it is reached through a passage in the envelope.

The engaging zone of the external contour of the envelope presents knurls, grooved or polygonal profiles for an efficient transmission of the screwing torque.

A sliding pair is provided, said sliding pair being formed by a radial protuberance and a corresponding groove located in the internal wall of the envelope, the sliding pair allowing the transmission of the torque in both directions between the envelope and a cylindrical member, and allowing the cylindrical member to freely axially translate inside an internal housing located between the threaded body and the envelope.

A spring is further provided to keep the frontal teeth of the axial free wheel engaged.

The axial free wheel comprises teeth integral with the threaded body and teeth integral with the cylindrical member; the shape of the teeth is chosen to allow the transmission of a sufficient screwing couple and a negligible unscrewing couple between the envelope and the threaded body.

The radial free wheel comprises teeth integral with the threaded body and radially deforming teeth integral with the envelope; the shape of the teeth is chosen to allow the transmission of a sufficient screwing couple and a negligible unscrewing couple between the envelope and the threaded body.

The contact between teeth, integral with the threaded body and teeth, integral with the envelope, occurs on contact surfaces inclining of an angle (γ, δ) in order to disengage the contact between teeth and teeth, so that the screwing couple transmitted by the envelope to the body is limited.

### AIMS AND EMBODIMENTS OF THE INVENTION

In order to modify the gas quantity inside the tire, a valve is usually fixed on the tread of the wheel (in case of tires with tube, the valve is sealing fixed to the same tube and comes out from the tread through a hole).

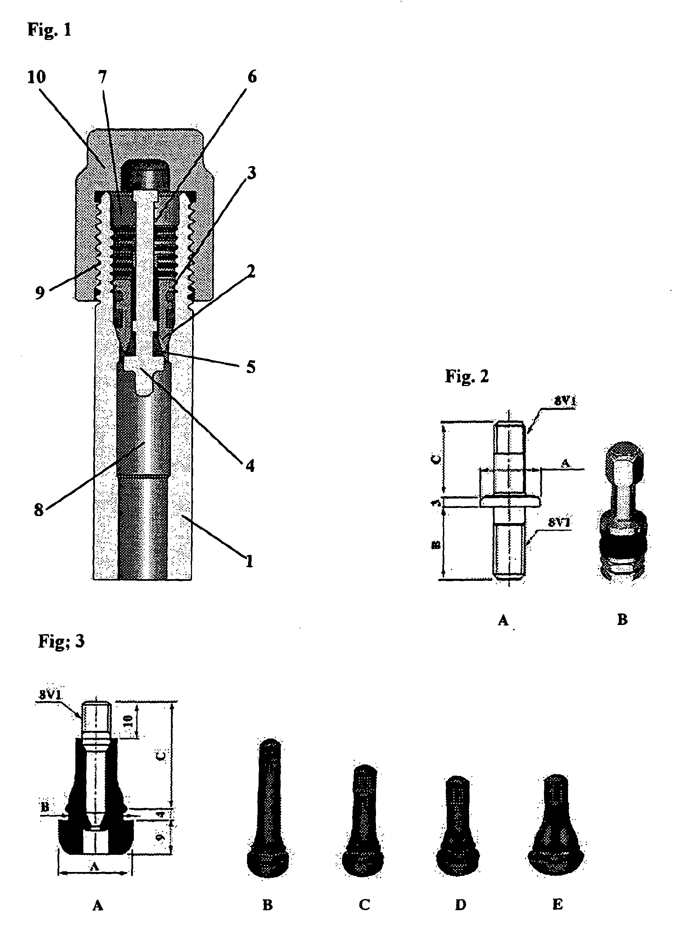

Said valve, shown in Fig 1, substantially consists of a metal tube (1) containing a body (2) fixed to its inner part through a sealing threaded connection (3), in which a self-closing member (4) with a sealing gasket (5) axially slides, said closing member (4) being hold in the closing position by a spring (6). The closing member (4) is capable of automatically opening when the pressure in its part faced outside, that is in the chamber (7), multiplied for the efficient surface of the sealing gasket (5) generates, on the closing member (4), an axial downwards force higher than the one due to the pressure in its part faced inside, that is in the chamber (8), or inside the tire, multiplied for the efficient surface of the sealing gasket (5) further to the force of the spring (6) or, vice-versa, capable of remaining closed when the force due to the pressure in its part faced outside (chamber 7) is lower than the one due to the pressure inside the tire (chamber 8) further to the force of the spring (6). Of course, the self-closing member (4) is also opened by a mechanical action from outside by applying a force on its end pushing towards the internal part of member (4) (this is an easy procedure to be followed by everyone to make the air come out from the tire).

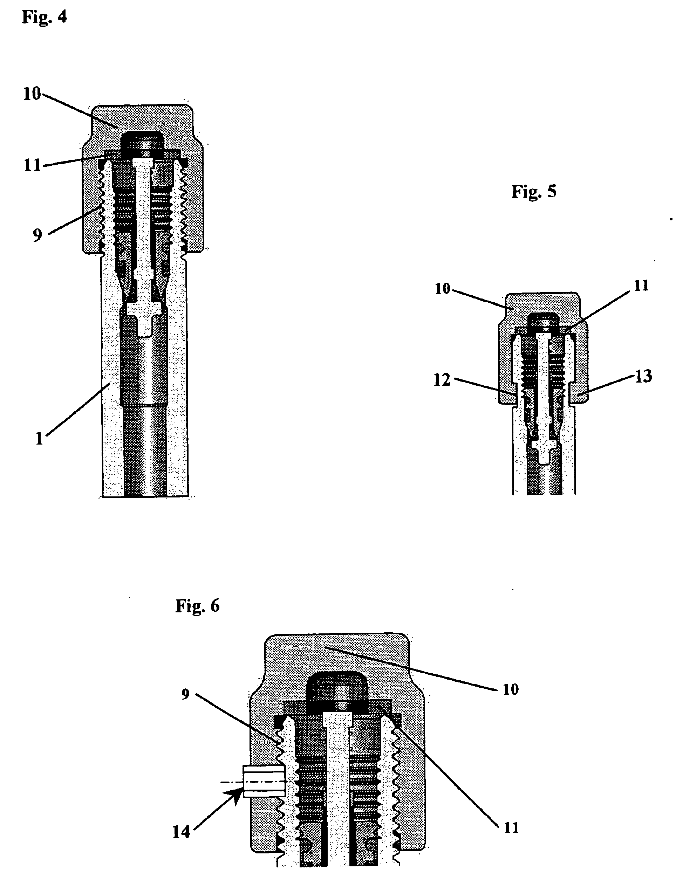

For what concerns the fixing of the valve to the wheel group, that is to the tread, in case of a tire with the tube, the metal tube (1) is let into a rubber protuberance connected to a hole in the tube of the tire, this protuberance being then inserted in its own hole in the tread; on the contrary, in case of tubeless tires, the metal tube (1) is properly shaped and eventually threaded, as shown in Fig 2, in its lower part in order to get a direct connection, by interposing proper gaskets, to the hole of the wheel tread (not shown) allowing the fixing through the clamping of a nut (full metal valve), which is connected to the hole of the tread by the simple interference of a rubber covering (Fig 3) applied to the metal tube (1) and then properly shaped and fitted with a groove having a suitable diameter (B), and with an abutment of diameter (A) capable of assuring the fixing of the valve loaded by the gas pressure inside the tire. All these embodiments are known and standard and the valves are obtained according to the different kinds of length and diameter.

The end of the metal tube (1) faced outside is externally threaded (member 9 of Fig 1) both to allow the clamping of members for inflating the tire and to grant the screwing and the clamping of a device (10) closing and/or protecting the valve or another device presenting further aims depending on the functioning condition of the tire, which will be, here following, called "cap", capable of preventing the direct entrance to the sealing internal part of the self-closing member (4), and protecting said member (4) and the relevant gaskets from impacts and/or the introduction of polluting external means (dirt, dust, etc) causing damages or malfunctioning.

The main aim of the cap is to protect the valve and its internal components against unexpected external means (dirt, etc), anyway, nowadays; several kinds of caps are available in order to assure more functions with different levels further to the usual protection against dirt and gas leaks.

Caps with gaskets for clamping the end of the metal tube are known, see the member (11) of Fig 4, capable of sealing against any gas leak through the valve when its internal members (3, 4, 5) of Fig 1 cannot assure a perfect sealing.

If the cap, for its particular shapes, proposes technologic members, and/or consists of special materials, and/or specially coloured, intensifies real or supposed technologic features (of the cap, wheel and/or its components, vehicle, etc) it meets aesthetic functions.

In addition, the cap is capable of supplying particular information about, for example, the tire and its use: for example, the colour of the cap often indicates the inflating with gas different from the usual air (for example, nitrogen, helium, etc) and/or specifies the safety function of the cap (for example, the yellow colour of the caps of the valves used for the tires of the aircraft).

Finally, caps are known including also measuring and/or surveying groups for the functioning condition of the tires (for example, by means of the measuring of the inflating pressure, temperature, etc.) and/or groups signalling the functioning condition outside. For example, the cap disclosed in EP No. 0 893 284 belonging to the Applicant. In these cases, said groups protect like a cap.

Here following, as "cap" will be called any member capable of being applied at the end of a tire inflating valve carrying out one ore more functions, some of these having been mentioned above.

Of course, the caps, as above defined, have to assure the mounting on the valve and the dismounting from the same valve (for example for the usual tire inflating) for many times.

In addition, it is necessary to consider that many typologies of groups for surveying and/or controlling and/or signalling the functioning condition of the tires have been developed. Some of these groups are clamped with the part of the valve located inside the tread; in this case the part of the valve located outside the tread usually maintains the shape and the dimension of a standard valve. Other groups are directly fixed to the internal part of the tread, and, therefore, the tire-inflating valve is not involved. In any case, the external end of the tire inflating valve is still protected by a cap screwed as in the usual inflating valves.

All the systems known from the prior art, both for usual inflating valves for tires with usual protection caps, and for special valves containing devices for surveying and/or controlling and/or signalling the functioning condition of the tires, and for usual valves in which, instead of the usual protection cap, a device for surveying and/or controlling and/or signalling the functioning condition of the tires is screwed at the ends of the valve, do not provide any appropriate mean to prevent the usual unscrewing of the part screwed to the external end of the valve (either for an usual cap or a more composite group for surveying and/or controlling and/or signalling the functioning condition of the tires). Therefore, said part is screwed to the valve (by hand or by proper tools) and, consequently, is easily unscrewed (by hand or by said tools). On the wheels of the land and aircraft vehicles with tires, anti-sabotage and an anti-theft function is expected. The anti-theft function can be considered as a subset, or a consequence, of the anti-sabotage function, in particular when the cap consists of a more complex device capable of carrying out other functions (for example, surveying and/or signalling the functioning condition of the tire) and/or, anyway, fitted with an own sensible value.

The known tire inflating valves have a cap which, if it does not carry out other functions for surveying and/or controlling and/or signalling the functioning condition of the tires, generally protects the internal part of the valve, being used also, if it is fitted with a proper gasket (11), as further sealing against gas leak through its inflating valve.

The cap (10), usually consisting of polymeric or metallic material, fitted or not with a sealing gasket for the tire inflating valve, is screwed on the threaded end of the valve, usually by hand, and, therefore, it is always easily unscrewed by hand. Also in case of more improved caps, eventually made of more resistant materials (for example metal substances) and screwed on the valve through stronger clamping couples obtained by means of proper manoeuvring keys or tools (pincers, for example), the removing of the cap is easier.

Everyone can unduly remove the cap without particular ability and/or proper tools in few seconds, in order to easily access to the valve and to its internal components (and, through them, inside the tire) and/or to appropriate the cap.

Both in case of usual protecting caps of the tire valves and in case of more complicated devices applied on the valves instead of the usual protecting cap, the theft does not cause the loss of an economical value only (that is very cheap in case of usual protecting cap) and the possible end of the functions the stolen cap carried out (in particular the devices for surveying and/or controlling and/or the signalling the function condition of the tires used instead of the usual cap), but, above all, the loss of the cap causes the risk of contamination and possible dangerous external actions for the valve body, and in particular for the self-closing member (4). In any case, the theft causes inconvenience, trouble, and annoyance for the owner and/or driver of the vehicle. Therefore, the anti-theft function for these devices is suggested both for usual protecting caps of the tire valves, and for a device signalling the tire inflating condition.

In addition to the above matter, the main problem of tampering or of the real sabotage is connected, since the removal of the protecting cap of the valve (for any kind of it) is often carried out not only to take possession of the cap, but also to access to the self-closing member (4) acting the opening of the valve and allowing the leakage of gas from the tire. Further to more evident actions, one of the classic case can occur (and that often occurs, in fun, from spite or for other worse reasons, up to a real attempt to the health of the driver and the passengers of the vehicle) is the intentional total or partial deflating by someone, of one or more tires (that probably being the case more easily and quickly to be obtained and, also, the worst one. In fact, it is very difficult to see a partial and unexpected deflating when getting in a vehicle or driving it at low speed, but the consequence can be even fatal because of the worsening of the driving and safety conditions for the vehicle, above all in case of high speed).

In order to obtain the partial or total deflating of the tire without particular effort, without using tools, without evident actions, that is without risks and in a short time, it is sufficient to remove (temporally or definitely) the protecting cap of the tire valve and to manually and directly act on the self-closing member (4) housed inside the tire inflating valve: pushing it with a soft effort towards the inside of the valve, the self-closing member (4) opens and allows the leakage of gas from the tire. Apart from the purpose of this action, it is a sabotage, which can have more or less serious consequences, from the only annoyance to the disaster. The matter is rather important in an age when, because of the political, religious, social, racial etc. reasons, the risk of attempts to particular subjects or, also, for terrorist purpose (therefore, without an exact choice of the person to be hit) it is increased, as the daily news disclose. The chance, so doing, to cause serious damages with a real cheap cost and a negligible risk cannot be undervalued (consider a sabotage of the tires of a bus), so that such a device being available for all the vehicles becomes very important. This kind of sabotage so easily practicable could be prevented, or, at least, could take a long time, or could be difficult and risky to be carried out, if it should be impossible to unscrew by hand the protecting cap of the tire valve. This behaviour of the valve would also carry out the secondary anti-theft function as above disclosed.

It is, therefore, useful and important to prevent such a situation. To obtain the desired results it should be sufficient to prevent the removing of the cap (10) (both for usual protecting cap or a device with other functions, as, for example, for controlling and/or signalling the functioning and/or using condition of the tire) without using a particular key or a tool available for staff only authorised to access to the valve or, anyway, to remove the cap.

### AIMS AND FEATURES OF THE INVENTION

The aim of the invention is to remedy to the failure of the prior art. The invention, as claimed, solves the problem of creating an anti-sabotage and anti-theft device for tire inflating valves.
The solved problems and the main features of the invention are disclosed below by referring to the enclosed drawings, not limiting the purpose of the invention:
1. To prevent the undue or unwanted removing of the cap (10) that means, practically, to provide the cap with the desired anti-sabotage function and, consequently, with the desired anti-theft function of the cap, without modifying the structure of the valve and the usual montage and use of the cap formalities;
2. To provide the cap with a device for controlling of the clamping torque.

As shown in Figs 5, 6, the anti-sabotage device is obtained in several ways, for example, by locating on the end of the valve, as interference for the connection of the cap, an undercut shaped contour (12) (See Fig 5), instead of the usual threading (9) so that the clamping cap (10) radially embraces one of its parts (13) around the undercut shaped contour (12); or, by keeping the threading (9), to provide (Fig 6) the cap (10) with a further radial clamping device (14) with respect to the end of the valve (clamp, radial screw, etc.) requiring a particular tool to be acted for removing the cap (10).

It is necessary to consider that it is not suggested to modify the usual tire inflating valve and, therefore, it is better to maintain the threaded end (standard) unchanged even providing the valve/cap group with an anti-sabotage-anti-theft device. It is also suggested to avoid using systems capable of changing or modifying the threaded end and, in general, the standard original structure of the valve.

It is also preferable, for practical reasons, that the montage and the clamping of the cap (10) (also in case of a more complex system and carrying out one or more functions, with particular regard to functions for controlling and signalling the functioning condition of the tire) and the starting of the anti-sabotage-anti-theft function are as normally obtained as for the screwing and clamping of the usual protecting cap, by hand, without particular tools or keys, since the anti-sabotage and anti-theft functions are useful only to prevent the removing of the cap, while they cause a difficult montage phase of the cap on the valve.

To attain the anti-sabotage and anti-theft functions without modifying the usual montage and clamping formalities of the cap (10) and without changing, anyway, the usual standard inflating valve of the tire, that is by maintaining the connection through the threading, it is necessary to provide the cap with apparatuses prevent the removing by just unscrewing unless a particular key or tool, to be supplied and not available for everyone, is used.

This is the aim of the invention. The solution cannot, of course, be so obvious: therefore, it cannot, for example, base on a very strong final clamping of the cap (10) during the montage for the screwing, that can prevent the unscrewing without using the keys or pincers allowing to apply quite high unscrewing couples on the cap (10).

In fact, everyone can be easily provided with these generic tools or members with equivalent function, and, therefore, it should not necessary, in this case, any particular tool or key for authorised staff only. Substantially, the function cannot be easily associated to a higher torque to be applied to the final clamping of the cap (10) after the screwing on the valve body.

In the same way, the function cannot be reached through a device which, when it is screwed on the valve, requires the permanent changing or the destruction of the device (to be carried out by means of particular tools) to obtain its removing, since it avoids the main need to use again the cap (10) for several times.

On the contrary, it is important that the cap (10) is normally screwed by applying the proper torque to the envelope (16) (usually this operation is carried out by hand, therefore the torque never results very high because of, also, the small diameters of the envelope), but that, when the clamping is reached, the threaded connecting member is no more removable if a particular tool, or mechanism or key is not used.

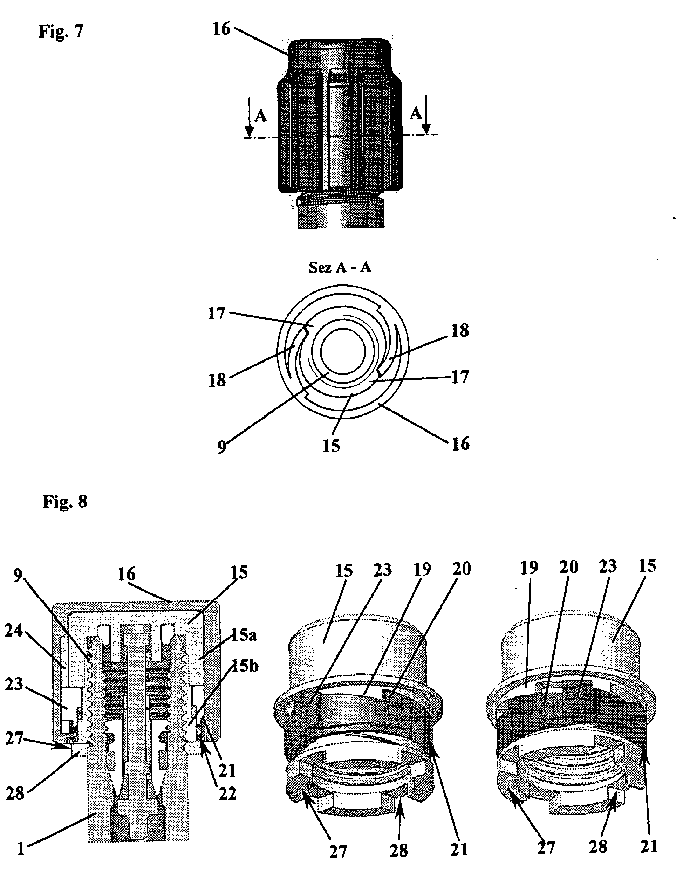

A formality to reach what is desired is obtained through a cap (10) that is no more a single part (now, the usual caps have an envelope which is directly threaded inside for the clamping to the end of the valve) but it is fitted with, at least, the two main members of Fig 7: an internally threaded member (15) capable of screwing on the end of the valve (9) and the envelope (16) of the cap. The connection between the envelope (16), the clamping and screwing couple is applied to (for example by hand by a proper tool) and the internally threaded member (15) is reached though a free wheel (Fig 7 section A-A) allowing the transmission of a torque between the envelope (16) and the threaded body (15) in the screwing direction only. So doing, when the clamping of the cap is reached and a proper stopping torque is granted (capable of contrasting an unscrewing couple), it is impossible to unscrew the cap from the valve since the unscrewing couple applied to the envelope (16) is not transmitted to the threaded body (15).

In order to remove the cap (10) it is necessary to provide parts on the threaded body (15); said parts being properly shaped and capable of clamping by means of a special key, or tool, or similar mechanism to be supply and available for staff only charged to remove the cap (10). Suitably, said parts are located in a zone of the cap/valve group not directly accessible, so that the unscrewing by means of improper tools instead of specific tools is prevented.

In addition, not only a device for surveying and/or controlling and/or signalling the functioning condition of the tires mounted in place of the protecting cap of the valve, but also the current protecting caps of the valve need a full and sure clamping on the threading (9) of the tube of the tire inflating valve. This clamping is necessary not only to avoid their unscrewing and falling during the running of the vehicle because of the external forces and vibrations, but also to assure the efficiency of one of the functions that these components (also in case of current protecting caps) have to carry out, consisting of creating, through a gasket (11), a further barrier to the eventual gas leakage through the valve when the self-closing member (4) or other internal parts of the inflating valve cannot assure a proper sealing for the gas of the tire and, therefore, cause a leakage through the internal passage of the valve.

The function preventing the manual unscrewing of the cap (10) after its screwing on the tire inflating valve is obtained by separating the envelope (16), capable of being manipulated and used to transmit to the device the couple necessary for the screwing, from the internally threaded member (15), capable of screwing on the threaded end of the tube of the tire inflating valve, and by introducing between them an unidirectional free wheel.

Said unidirectional free wheel has a radial shape according to the functioning schemes of Said unidirectional free tripper has a radial shape according to the functioning schemes of Fig 7 Section A-A, or an axial shape, according to the functioning schemes of Fig 8.

According to a preferred embodiment of the radial shape, radial teeth (17) are found on the external cylindrical surface of the threaded body (15), the teeth (17) being capable of engaging the frontal surface of proper protuberances (18) connected to the internal cylindrical surface of the envelope (16). Said protuberances (18) are normally located in the configuration of Fig 7 Section A-A, but they present an elasticity sufficient to allow their radial flexion towards outside so that they disengage, eventually, from the teeth (17).

The radial elasticity of the protuberances (18) is eventually controlled or changed by means of external elastic members, as springs, polymeric members, etc.

By applying a torque in a clockwise direction (according to Fig 7 Section A-A) to the envelope (16), the protuberances (18) engage the teeth (17) and transmit the torque to the threaded body (15). Vice-versa, by applying a torque in a counter-clockwise direction (according to Fig 7 Section A-A) to the envelope (16), the protuberances (18) slide on the back of the teeth (17) and they do not transmit any torque to the threaded body (15) (a minimum value due to the friction during the sliding of the protuberances (18) on the back of the teeth (17) excepted).

According to a preferred embodiment of the axial scheme as for Fig 8 of the frontal teeth (19), parallel to the axis of the device and located on an external circumference of the threaded body (15), engage the homologous axial frontal teeth (20) located on a cylindrical member (21) to be co-axially mounted on the threaded body (15) and capable of axially sliding downwards with respect to the body (15). The sliding has a sufficient width to disengage the homologous teeth, while a spring (22) pushes on the cylindrical member (21) upward, which tends to maintain the teeth (19, 20) in contact each other. For mounting reasons of the cylindrical member (21), the threaded body (15) consists of two parts (15a, 15b) welded each other.

The cylindrical member (21) is connected through a sliding pair, for example the radial protuberance (23), to a corresponding groove (24) located in the internal wall of the envelope (16); so doing, it is possible to transmit a torque in both directions between the envelope (16) and the cylindrical member (21), which, anyway, carries out its axial translation in the housing located inside the external cylindrical surface of the threaded body (15) by contrasting the action of the spring (22).

By applying a torque in the screwing direction on the envelope (16), said torque is transmitted to the cylindrical member (21), its axial teeth (20) engage the homologous axial teeth (19) of the threaded body (15). In this way, the stopping torque is transmitted to the threaded body (15).

After the clamping, a non-return couple acts between the threaded body (15) and the threaded end (9) of the tube (1) of the tire-inflating valve.

By acting a torque in the unscrewing direction on the envelope (16), said torque is transmitted to the cylindrical member (21), its axial teeth (20) tend to slide on the homologous back of the axial teeth (19) of the threaded body (15); this is due to the particular inclination angle of the backs of the teeth, so that the cylindrical member (21) tends to downwards translate against the force of the spring (22), without transmitting an unscrewing couple to the threaded body (15), a value of the friction couple in the sliding motion of the backs of the axial teeth excepted.

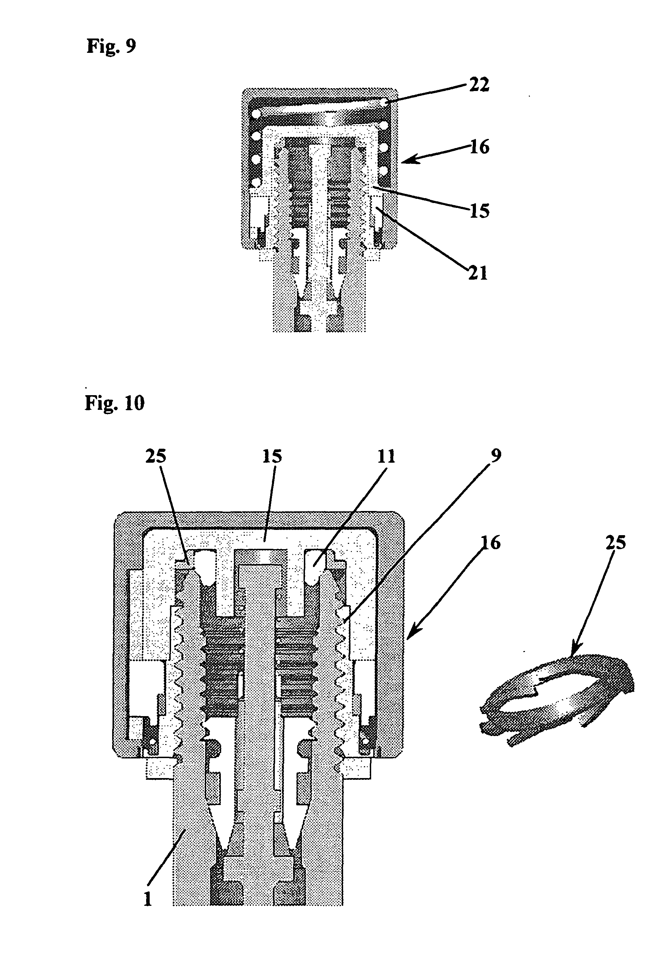

The spring (22), as shown in Fig 9, is also located between the threaded body (15) and the envelope (16): in this case, said spring (22) acts as above, if the sliding pair between the envelope (16) and the cylindrical member (21) presents an axial abutment compelling the cylindrical member (21) to move downwards the envelope (16) against the force of the spring (22), if the unscrewing couple is applied to the envelope (16) and the teeth backs of the cylindrical member (21) slide with respect to the ones of the threaded body (15).

With this configuration, it is also possible to make the envelope (16) and the cylindrical member (21) in just one piece or make them integral each other.

The embodiment with radial arrangement presents a radial encumbrance higher than the axial arrangement: therefore, this axial arrangement is better than the radial one because of the limits for the radial admissible encumbrance with respect to the environment and the components existing around the tire inflating valve.

It is obvious that, by using these kinds of mechanisms, only a part of the torque in the transmitted to the threaded body (15) because of the friction between the free wheel teeth and the threaded body (15).

In both radial and axial embodiments, the mesh among the homologous teeth is replaced by homologous cavities on both parts with interposition of properly shaped floating connecting rods, as for free wheels of common industrial production.

So doing, the unscrewing of the device acting on the external envelope (16) is prevented, as it is desired, on condition that the threaded body (15) is clamped if it is screwed, causing a non-return clamping couple with a value higher than the torque that can be transmitted in the unscrewing direction, said torque being low but existing.

In order to assure a higher non-return clamping couple, further to the usual friction between both parts connected through the thread when their both ends are in contact, other technical members are used, as for example:
- Self-clamping devices in the threaded body (15) on the male thread (9), as a partial deformation of the female thread of the threaded body (15) or the interposition, on its upper end, of a deforming element capable of causing an high friction couple on the thread (9), as usually used for the self-clamping nuts. (See Filippi, Disegno di Macchine, Vol. II, Hoepli as known not limiting or exhaustive examples);
- Further components allowing a strong friction and an effective non-return couple between both parts (15, 19) fixed each other, as for example elastic washers of UNI 1751 e 1752 o DIN 128, undulated and knurled elastic washers, plane or conic elastic washers with toothing according to UNI 3703, 3704, 3705, 3706, etc (See Filippi as cited), to be applied to the abutment end of the male thread (9) in order to avoid damages of the male thread.

An embodiment is shown in Fig 10: the upper abutment end of the male thread section (9) of the tube (1) of the inflating valve contemporaneously touches both the sealing gasket (11) and the element (25) characterised by elastic axial toothings engaging the seat found on the upper end of the cavity of the threaded body (15) and the abutment end of the tube during the clamping, causing a strong non-return couple against the unscrewing.

To assure the unscrewing is carried out when required, without carrying out by hand or by usual tools and/or commercial members, it is necessary to apply the unscrewing by usual tools and/or commercial members, it is necessary to apply the unscrewing couple directly on the threaded body (15) in zones which are reachable only by means of proper tools and available only for buyer of components fitted with anti-theft devices.

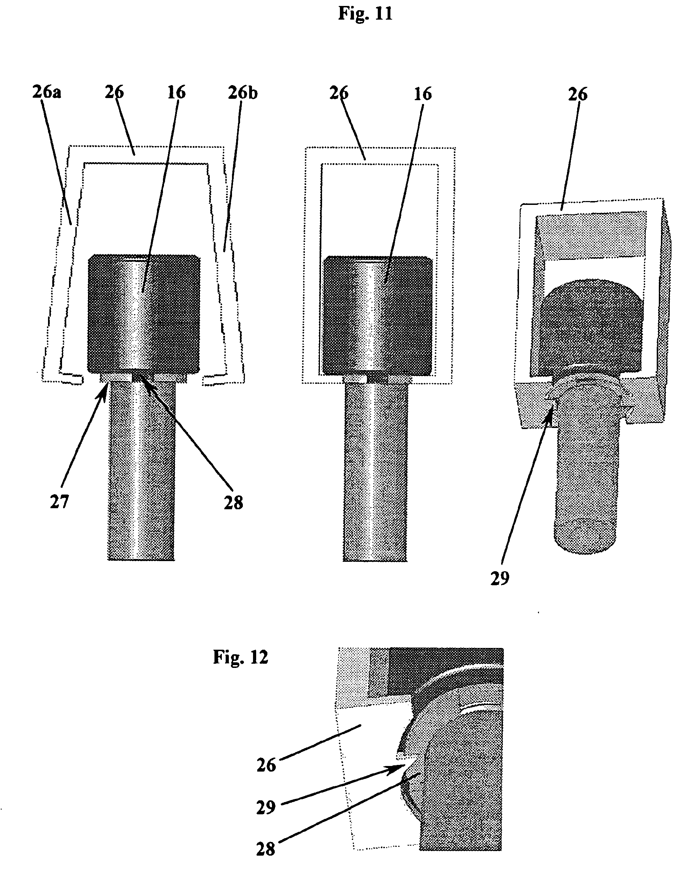

An embodiment is shown in Figg 8, 11, this embodiment using a special key (26) with two arms on the lower part (27) of the threaded body (15); the key (26) axially extended downwards so that proper radial notches (28), capable of introducing the teeth (29) of the special key (26), are formed. Said lower part (27) is covered by the external envelope (16) and is undercut with respect to the envelope (16) if someone wants to access from outside (considering the usual mounting condition of the tire valves on the vehicle wheels). Only by means of a key capable of conforming to the undercut and engaging the notches (28) found on the lower part (27) of the threaded body (15), so that the required unscrewing couple is applied to the threaded body (15), the unscrewing of the valve cap is carried out.

Both arms (26a, 26b) of the special key (26) are flexible or movable in the radial direction to open and allow reaching the lower part (27) of the threaded body (15).

The teeth (29) located at the ends of the arms (26a, 26b) of the special key (26) to engage the lower part (27) of the threaded body (15) are shaped as shown in Fig 12 in order to be used just for applying a unscrewing couple to the threaded body (15), said teeth (29) present a sloping plane tending to extract them from the notch (28) if a screwing couple is applied. This is useful to avoid, anyway, the application of exceeding clamping couples.

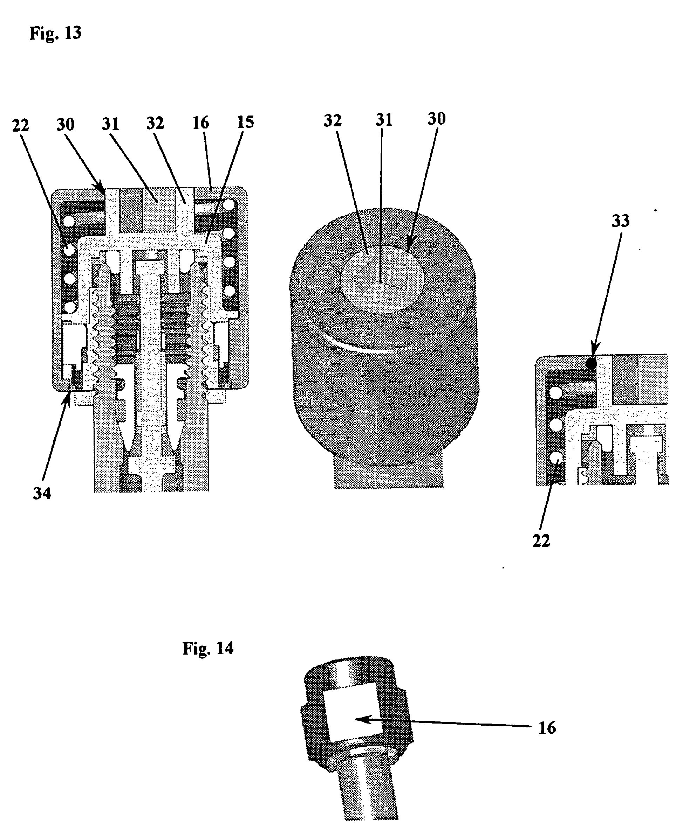

A further embodiment to directly apply the unscrewing couple to the threaded body (15) in zones which are reached only by means of proper special tools consists, as shown in Fig 13, of creating a central opening (30) in the upper wall of the external envelope (16), through said central opening (30) a blind hole (31), finding on a protuberance (32) located on the upper part of the threaded body (15), is reached. The protuberance has a proper and non standard contour where only a key with a male profile having the same area of the blind hole (31) is inserted for unscrewing.

To prevent the introduction of impurities, the interference zone between the central opening (30) of the envelope (16) and the protuberance (32) is fitted with a proper gasket (33).

In all the described embodiments, in order to prevent the introduction of impurities, a further gasket or protecting lip (34) is provided in the lower part of the envelope (16) in its interface zone with the cylindrical lower part of the threaded body (15).

In all the above mentioned embodiments, it is also possible to shape the external contour of the envelope (16) in the engaging zone for applying the couple (both manual and by means of manoeuvring keys or proper tools) not only with a cylindrical shape but also with shapes more suitable for a better clamping and transmission of the torque, as for example, knurls, grooved or polygonal contours as shown in Fig 14.

The clamping of the cap on the valve is correctly reached when it is obtained by means of a proper, sufficient and not excessive final couple. Both in case of manual screwing of the cap on the end of the tire inflating valve and, above all, in case of using of ancillary tools for a stronger clamping couple, the risk is to apply a too strong clamping couple damaging the cap and/or the sealing gasket (11). But, the application of an excessive clamping couple is not the only problem: also an insufficient clamping couple is harmful since it invalidates the sealing gasket (11) action and causes the unexpected, even full, unscrewing of the cap because of the vibrations due to the running of the vehicle.

Advantageously, the anti-sabotage and anti-theft device applied to the protecting cap of the tire valve (also in case the cap comprises groups for surveying and/or controlling and/or signalling the functioning condition of the tires) is, therefore, fitted with members assuring an efficient and full clamping of the threaded elements (15, 9) and of the eventual gasket (11) located inside the cap for sealing on the upper edge of the threaded end (9) of the tire inflating valve by a not skilled person who has not any proper tool (and, therefore, he is not able to verify if the couple for the screwing has a sufficient value for clamping).

Another embodiment is suggested which, further to assure a full and efficient clamping of the threaded body (15) on the valve (9), that is to advise the operator when a screwing torque with a proper value is reached, prevents an excessive clamping by applying screwing torque with a value higher than the proper one. In fact, the excessive destruction and consequent uselessness when protection caps for tire inflating valves made of plastic are used. That particularly occurs when the cap presents a gasket in the beat zone for sealing of the tire gas. An excessive clamping torque easily damages this gasket. Of course, this occurs also in case of a component screwed on the end of the valve carrying out other functions, as for example surveying and/or controlling and/or signalling the functioning condition of the tire, not only in case of an usual protection cap.

To reach this purpose it is necessary, therefore, to apply a limiting device for the screwing torque also capable of advising the operator if the required torque value is obtained. The usual and well-known tire valves, and relevant protection caps, do not present any function or any anti-theft and anti-sabotage device, nor mechanisms assuring a full and efficient clamping of the cap and its sealing gasket on the threaded end of the tire inflating valve. The same thing is valid for the device surveying and/or controlling and/or signalling the functioning condition of the well-known tires.

A device to get what mentioned above consists in applying a member limiting the screwing torque applied by the external envelope (16) to the threaded body (15) through the free **wheel.**

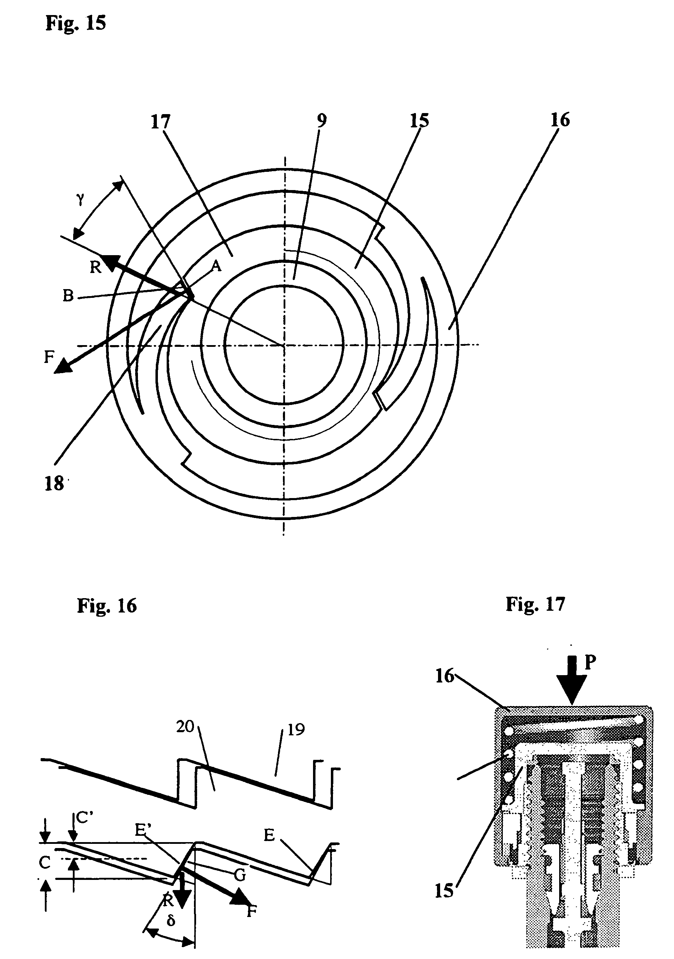

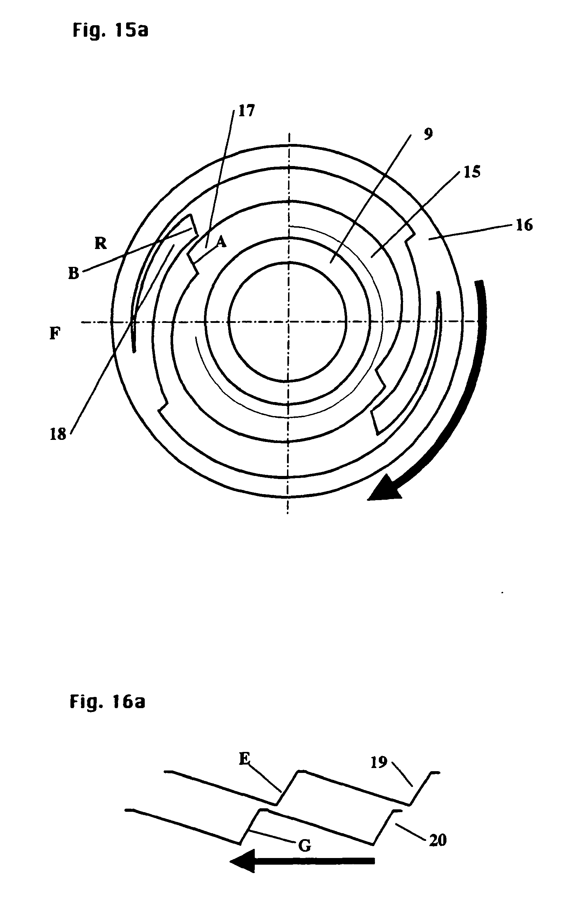

Considering the radial free **wheel** with teeth integral with pieces of Fig 7 Section A-A shown in Fig 15, the frontal part located between the teeth (17) and the protuberances (18) is so shaped that the frontal part is not radial, that is perpendicular to the force mutually transmitted each others (approximately tangential), but slanted with a proper angle γ with respect to the radial direction causing, during the contact between both surfaces A and B of the tooth (17) and the protuberance (18), a radial component R tending to bend the protuberance (18) towards outside in order to disengage it from the corresponding tooth on the threaded body (15).

When a pre-established perpendicular force F between the two surfaces A and B (that is when a pre-established torque value applied to the external envelope (16) is reached assuring the proper clamping of the threaded body (15) on the tube of the tire inflating valve), the radial component R reaches a value causing the disengaging of the two surfaces A and B of the teeth of the free **wheel**. This, as desired, limits the maximum clamping couple to be applied and advises the operator, who is applying the torque, that a quick decrease of the opposite couple, together with a vibration and noise due to the radial release of the teeth, by indicating the correct conclusion of the clamping operation. So doing a first kind of radial free **wheel** is reached, also forming a couple limiting device which is easily regulated by properly planing the angle γ and the elastic reaction of the protuberances (18).

With regards to the axial free **wheel** embodiment as shown in Fig 8, the couple limiting device is made by a slant δ of Fig 16 to the contacting surfaces of the frontal teeth (19, 20), initially on planes parallel to the axis of the device, transmitting the torque between the external envelope (16) and the threaded body (15) through the cylindrical member (21): the same effect as described above for the radial free **wheel** is reached. So doing, moreover, frontal cams (19, 20) are obtained allowing a relative helical movement between the external envelope (16) and the threaded body (15). By using a contrasting elastic member (the spring (22) of Fig 9), properly loaded, tending, as reaction, to prevent the axial movement of the cylindrical member (21) and/or the external envelope (16) with respect to the threaded body (15), said helical movement, and the relevant axial descent of the cylindrical member (21) and/or the external envelope (16) with respect to the threaded body (15), begins only after the screwing couple applied to the external envelope (16) has exceeded a value capable of generating, in the helical coupling of the frontal cams (19, 20), an axial force higher than the one due to the contrasting elastic member (22). When this couple value has been exceeded (corresponding to the correct clamping couple of the two threaded elements) the relative sliding of the helical surfaces E and G of the frontal cams (19, 20) and the descent, for a stroke C, of the cylindrical member (21) and/or the external envelope (16) with respect to the threaded body (15), at the end of which the cylindrical member (21) and/or the external envelope (16), due to the force of the contrasting elastic element (22), releases again upwards until the surface G of the connected frontal cam is in contact with the surface E' of the immediately following tooth located on the threaded body (15). In this way a second kind of axial free **wheel** is obtained which, in function of the force of the contrasting elastic element (22), forms a couple limiting device capable of being easily adjusted by elastic element (22), forms a couple limiting device capable of being easily adjusted by properly planing the angle δ and the contrasting force of the spring (22), and, as for the previous case, a system advising that the correct couple value has been reached.

By applying a couple to the external envelope (16) higher than the one necessary to exceed the maximum torque to be applied to the threaded body (15) and the reaction of the elastic element (22), an axial force P positive in the direction shown in Fig 17 is reached. This force P with stroke C is due to the helical coupling of the surfaces E and

G of the frontal cams and to the external envelope (16) with respect to the threaded body (15) or other interposed or connected members. Said axial force P is used for carrying out functions relevant to the mounting and/or functioning and/or using of both usual protection caps of tire inflating valve and, more particularly, devices for controlling and/or surveying and/or signalling the functioning condition of the tires screwed to the external end of the inflating valve.

A further advantage of this embodiment is due to the fact that, before applying the above mentioned positive axial force P, it is, anyway, necessary to efficiently complete the clamping of the threaded body (15) on the end (9) of the valve by assuring in advance the good result of this function.

What said up to now is useful for all the above mentioned cases, in particular when the axial force P is necessary for carrying out the functions relevant the mounting and/or functioning and/or using of usual protection caps of the tire inflating valve and, more particularly, devices for controlling and/or surveying and/or signalling the functioning condition of the tires screwed to the external end of the inflating valve which, before their activation, have to be correctly clamped on the valve with a pre-established couple value even if the operation is carried out by hand and without any particular tool or measuring and controlling member.

An other embodiment of the couple limiting device provides that the relative sliding between the helical surfaces E and G of the two frontal cams, which are respectively found on the threaded body (15) and the external envelope (16), is limited to just one stroke C' (Fig 16) lower than the stroke C causing their disengage and the passage of the surface G from the contact with the surface E to the contact with the surface E' after passing said stroke C. When the pre-established value of the clamping couple of the threaded body (15) on the valve end is exceeded, a direct helical movement of the external envelope (16) with respect to the threaded body (15) occurs; said movement causes a translation of the external envelope (16) with respect to the threaded body (15) for a quantity corresponding to C'. When the clamping couple applied to the external envelope (16) is releases, it occurs the return of the external envelope (16) to its rest position with respect to the threaded body (15), with sufficiently low angles δ, by means of a retrograde helical motion due to the reaction of the elastic element (22).

By applying the couple-limiting device, with respect to the screwing torque, as further advantage, any exceeding clamping is prevented.

All the above mentioned embodiments are applied not only to the usual protection caps of the tire inflating valves, but also to the devices for controlling and/or surveying and/or signalling the functioning condition of the tires which are screwed on the external end of the inflating valve and, therefore, they protect the valve and are subject to the risk of removal for sabotage and/or theft.

The mentioned technical solutions, for what concerns the control of the clamping couple, and in particular the solutions allowing (through the advise of the start of the tripping) to reach a proper and efficient clamping value and/or solutions allowing, anyway, to avoid the application of exceeding clamping couples, can be applied and used separately and/or contemporaneously by applying the anti-sabotage-anti-theft system making the manual unscrewing impossible by an unscrewing couple applied to the external envelope (16).

All the above mentioned embodiments are used not only for components to be applied to the end of the tire inflating valves but in all cases of controlled clamping of threaded members in order to assure a pre-established value of the clamping couple and/or to avoid the unexpected application of clamping couples presenting a value much higher than the pre-established one and/or to prevent the unscrewing by applying an unscrewing couple to an external envelope (16), even if the screwing or unscrewing couples are applied by hand or by means of keys and/or tools which engage the external envelope (16).

All the above mentioned devices, and the external envelope (16) in particular, are made of polymeric materials or metal ones, fitted with colouring due to the nature or pigmentation of the material or to coating of varnish or other substances. In addition, the external plan contour of the envelope (16) presents a circular section or any other section suitable to favour the transmission of the torque by hand or by means of keys and/or tools. In particular, said external plan contour presents protuberances or a polygonal shape.

## Claims

1. An anti-sabotage and anti-theft device for tire inflating valves, comprising
a cap (10) with an internally threaded body (15) for screwing on the tire inflating valve (9), and
an envelope (16) connected to the internally threaded body (15), wherein then envelope (16) prevents direct access to the threaded body (15), wherein
access to the threaded body (15) being enabled only in pre-established zone (27, 30) thereof, while the unscrewing of the threaded body (15) occurs through a tool (26) acting on said zone (27, 30),
**characterized in that**,
the envelope (16) and the internally threaded body (15) are connected trough a free-wheel allowing the valve cap (10) to be screwed onto the tire valve, but disables the unscrewing of the cap (10).

2. A device as in claim 1, wherein the free-wheel presents a radial development.

3. A device as in claim 1, wherein the free-wheel presents an axial development.

4. A device as in claim 1, wherein an element (15) is further provided between the threaded body (15) and the threaded end (9) of the tube (1) of the valve; the element (25) generating an unscrewing torque higher than the one due to the clamping of the threaded body (15) on the tube (1) only.

5. A device as in claim 1, wherein the pre-established accessing zone (27, 30) to the threaded body (15) for the its unscrewing, in which a tool is engaged, is located in the upper part of the threaded body (15), the zone (27, 30 being reached through a passage (30) in the envelope (16).

6. A device as in claim 1, wherein an engaging zone of the external contour of the envelope (16) presents knurls, grooved or polygonal profiles for an efficient transmission of the screwing torque.

7. A device as in claim 1, wherein a sliding pair is provided, said sliding pair consisting of a radial protuberance (23) disposed in a cylindrical member (21) and of a corresponding groove (24) located in the internal wall of the envelope (16), the sliding pair allowing the transmission of the torque in both directions between the envelope (16) and a cylindrical member (21), and enabling the cylindrical member (21) to freely axially translate inside an internal housing located between the threaded body (15) and the envelope (16).

8. A device as in claim 3, wherein the axial free-wheel comprises teeth (19) integral with the threaded body (15) and teeth (20) integral with the cylindrical member (21); the shape of the teeth (19, 20) is chosen to allow the transmission of a sufficient screwing torque and a negligible unscrewing torque between the envelope (16) and the threaded body (15, 15a, 15b).

9. A device as in claim 8, wherein a spring (22) is further provided to keep the frontal teeth (19, 20) of the axial free tripper engaged.

10. A device as in claim 2, wherein the radial free-wheel comprises teeth (17) integral with the threaded body (15) and radially deforming teeth (18) integral with the envelope (16); the shape of the teeth (17, 18) is chosen to allow the transmission of a sufficient screwing couple and a negligible unscrewing couple between the envelope (16) and the threaded body (15, 15a, 15b).

11. A device as in claim 10, wherein the contact between teeth (17, 19), integral with the threaded body (15, 15a, 15b) and teeth (18, 20), integral with the envelope (16), occurs on contact surfaces inclining of an angle (γ, δ) in order to disengage the contact between teeth (18, 20) and teeth (17, 19), so that the screwing couple transmitted by the envelope (16) to the body (15, 15a, 15b) is limited.

## Patentansprüche

1. Diebstahlsicherung und Sabotageschutzvorrichtung für Reifenventile, die folgende Elemente enthält:
eine Kappe (10) mit einem Körper (15), dessen Innengewinde auf einem Reifenventil (9) angeschraubt ist, und
eine Hülle (16), die mit dem Körper (15) verbunden ist, wobei die Hülle (16) den unmittelbaren Eingang in den Körper (15) hindert,
wobei der Eingang in den Körper (15) nur in einer vorbestimmten Eingangszone (27, 30) des Körpers (15) geschehen kann, und wobei das Abschrauben des Körpers (15) durch ein Gerät (26) verursacht wird, das auf diese Eingangszone (27, 30) wirkt,
wobei die Vorrichtung **dadurch gekennzeichnet ist, daß**
die Hülle (16) und der Körper (15) durch eine Freilaufeinrichtung verbunden werden, welche die Kappe (10) auf dem Reifenventil anschrauben lässt, wobei die Freilaufeinrichtung das Abschrauben der Kappe (10) hindert.

2. Vorrichtung nach Anspruch 1 **dadurch gekennzeichnet, daß** die Freilaufeinrichtung eine Radialentwicklung aufweist.

3. Vorrichtung nach Anspruch 1 **dadurch gekennzeichnet, daß** die Freilaufeinrichtung eine Axialentwicklung aufweist.

4. Vorrichtung nach Anspruch 1 **dadurch gekennzeichnet, daß** ein Bestandteil (25) zwischen dem Körper (15) und einem geschnittenen Ende des Rohres (1) des Reifenventils vorgesehen ist,
wobei der Bestandteil (25) eine Abschraubdrehkraft erzeugt, die stärker ist, als die Kraft, die nur durch das Festklemmen des geschnittenen Körpers (15) verursachtwird.

5. Vorrichtung nach Anspruch 1 **dadurch gekennzeichnet, daß** sich die vorbestimmte Eingangszone (27, 30) in dem Körper (15), auf dem ein Werkzeug zu dessen Abschrauben wirkt, im oberen Teil des Körpers (15) befindet, wobei die Eingangszone (27, 30) durch eine Öffnung (30) der Hülle (16) erreicht werden kann.

6. Vorrichtung nach Anspruch 1 **dadurch gekennzeichnet, daß** eine Griffzone des Außenkonturs der Hülle (16) gerändelte, gerillte und vieleckige Profile zu einer wirksame Übertragung des Abschraubdrehmoments aufweist.

7. Vorrichtung nach Anspruch 1 **dadurch gekennzeichnet, daß** eine prismatische Schiebekupplung vorgesehen ist, welche aus einem Radialvorsprung besteht, der sich in einem zylindrischen Glied (21) befindet; außerdem besteht die Schiebekupplung aus einer entsprechenden Rille (24), die in der Innenwand der Hülle (16) angeordnet ist; die Schiebekupplung erlaubt die Übertragung des Drehmoments in beiden Richtungen zwischen der Hülle (16) und einem zylindrischen Element (21), und lässt das zylindrische Glied (21) innerhalb einem Innenraum frei bewegen, der zwischen dem Körper (15) und der Hülle (16) angeordnet ist.

8. Vorrichtung nach Anspruch 3 **dadurch gekennzeichnet, daß** die axiale Freilaufeinrichtung Zähne (19) enthält, die am Gewindekörper (15) befestigt sind, und Zähne (20), die mit dem zylindrischen Glied (21) fest verbunden sind; die Form der Zähne (19, 20) ist so gewallt, daß die Übertragung eines genügenden Einschraubdrehmoments und einer unwesentlichen Ausschraubdrehmoments zwischen der Hülle (16) und dem Gewindekörper (15) erhalte wird.

9. Vorrichtung nach Anspruch 8 **dadurch gekennzeichnet, daß** außerdem eine Feder (22) vorgesehen ist, welche die Vorderzähne (19, 20) der Freilaufeinrichtung geklemmt hält.

10. Vorrichtung nach Anspruch 2 **dadurch gekennzeichnet, daß** die axiale Freilaufeinrichtung Zähne (17), die am Körper (15) befestigt sind, und radial verformende Zähne, die mit der Hülle (16) fest verbunden sind, enthält; die Form der Zähne (17, 18) ist so gewallt, daß die Übertragung eines genügenden Einschraubdrehmoments und einer unwesentlichen Ausschraubdrehmoments zwischen der Hülle (16) und dem Gewindekörper (15, 15a. 15b) erhalten wird.

11. Vorrichtung nach Anspruch 10 **dadurch gekennzeichnet, daß** die Berührung zwischen Zähnen (17, 19), die am Gewindekörper (15, 15a, 15b) befestigt sind, und Zähnen (18, 20), die mit der Hülle (16) fest verbunden sind, auf Berührungsflächen stattfindet, die von einem Winkel (γ, δ) geneigt ist, damit die Berührung zwischen Zähnen (18, 20) und Zähnen (17, 19) so gelöst wird, daß der Anschraubdrehmoment begrenzt wird, der durch die Hülle (16) und den Körper (15, 15a, 15b) übertragen wird.

## Revendications

1. Dispositif anti-sabotage et anti-vol pour soupapes de pneumatiques; le dispositif comprend les suivants éléments:
un chapeau (10) avec un corps (15) intérieurement fileté pour être vissé à la soupape d'un pneumatique, et
une enveloppe (16) reliée au corps (15) intérieurement fileté, l'enveloppe (6) empêche l'accès direct au corps fileté (15), et
l'accès au corps fileté (15) est permis seulement dans une zone (27, 30) préétablie du même corps (15), tandis que le dévissage du corps (15) se produit par un outil (26) qui agit sur la zone (27, 30),
le dispositif est **caractérisé en ce que**,
l'enveloppe (16) et le corps (15) intérieurement fileté sont reliés par un mécanisme à roue libre pur permettre au chapeau de la soupape (10) d'être vissé sur la soupape du pneumatique, mais pour empêcher le dévissage du chapeau de la soupape (10).

2. Dispositif selon la revendication 1, **caractérisé en ce que** le mécanisme à roue libre présente un développement radial.

3. Dispositif selon la revendication 1, **caractérisé en ce que** le mécanisme à roue libre présente un développement axial.

4. Dispositif selon la revendication 1, **caractérisé en ce qu'**un élément (25) est en outre pourvu entre le corps filet (15) et l'extrémité (9) du tube (1) de la soupape (10),
l'élément (25) engendre un couple de dévissage plus haut que celui qui est dû seulement à la retenue du corps fileté (15) sur le tube (1).

5. Dispositif selon la revendication 1, **caractérisé en ce que** la zone préétablie (27, 30) d'accès au corps fileté (15) pour son dévissage, dans laquelle un outil s'engage, est logée dans la partie supérieure du corps fileté (15), la zone (27,30) est rejointe à travers un passage dans l'enveloppe (16).

6. Dispositif selon la revendication 1, **caractérisé en ce qu'**une zone d'engagement du contour extérieur de l'enveloppe (16) présente des moletages, des profiles cannelés ou polygonaux pour une transmission efficace du couple de vissage.

7. Dispositif selon la revendication 1, **caractérisé en ce qu'**un accouplement coulissant est pourvu, l'accouplement coulissant comprend une protubérance radiale (23) disposée dans un membre cylindrique (21) et une cannelure (24) correspondante, située dans une paroi interne de l'enveloppe (16), l'accouplement coulissant permet la transmission du couple dans tous les deux directions entre l'enveloppe (16) et un membre (21) cylindrique, et rend le membre (21) cylindrique apte à se déplacer librement et axialement à l'intérieur d'un logement interne, qui se trouve entre le corps fileté (15) et l'enveloppe (16).

8. Dispositif selon la revendication 3, **caractérisé en ce que** le mécanisme à roue libre axiale comprend des dents (19) solidaires au corps fileté (15) et des dents (20) solidaires au membre cylindrique (21); la forme des dents (19, 20) est choisie de façon à permettre la transmission d'un couple de vissage suffisant et d'un couple de dévissage négligeable entre l'enveloppe (16) et le corps fileté (15a, 15b, 15c).

9. Dispositif selon la revendication 3, **caractérisé en ce qu'**un ressort est en outre pourvu pur maintenir les dents frontales (19, 20) du mécanisme à roue libre engagés.

10. Dispositif selon la revendication 3, **caractérisé en ce que** le mécanisme à roue libre radiale comprend des dents (17) solidaires au corps fileté (15) et des dents (18) qui se déforment radialement et sont solidaires à l'enveloppe (16); la forme des dents (17, 18) est choisie de façon la transmission d'un couple de vissage suffisant et d'un couple de dévissage négligeables entre l'enveloppe (16) et le corps fileté (15a. 15b, 15c).

11. Dispositif selon la revendication 10, **caractérisé en ce que** le contact entre les dents (17, 19), solidaires au corps fileté (15a. 15b, 15c), et les dents (18, 20), solidaires à l'enveloppe (16) se produit sur des surfaces de contact inclinées d'un angle (γ, δ), afin de désengager le contact entre les dents (18, 20) et les dents (17, 19), de sorte que les couple de vissage transmis par l'enveloppe (16) au corps fileté (15a. 15b, 15c) est limité.
